# EUROPÄISCHE PATENTSCHRIFT

(11) **EP 0 643 238 B1**
(45) Veröffentlichungstag und Bekanntmachung des Hinweises auf die Patenterteilung: **28.08.1996**
(21) Anmeldenummer: 94106801.7
(22) Anmeldetag: 02.05.1994
(51) Int. Cl.: F16F 13/26

(54) **Umschaltbares hydraulisch dämpfendes Lager**
Switchable hydraulical damping support
Support d'amortissement hydraulique commutable

(30) Priorität: 09.09.1993 DE 4330560
(43) Veröffentlichungstag der Anmeldung: 15.03.1995
(73) Patentinhaber: Firma Carl Freudenberg, D-69469 Weinheim (DE)
(72) Erfinder: Eckel, Hans-Gerd, Dr., D-69515 Laudenbach (DE); Kunkel, Anja, D-69483 Siedelsbrunn (DE); Müller, Michael, Dr., D-64297 Darmstadt (DE)

(56) Entgegenhaltungen:
- EP-A- 0 541 902
- EP-A- 0 547 287
- DE-A- 4 010 233
- DE-A- 4 209 735
- PATENT ABSTRACTS OF JAPAN vol. 8, no. 203 (M-326) (1640) 18. September 1984 & JP-A-59 093 537 (TOYODA GOSEI K.K.) 30. Mai 1984

## Beschreibung

Die Erfindung betrifft ein umschaltbares hydraulisch dämpfendes Lager mit einem Traglager und einem Auflager, die durch eine Tragfeder aus elastomerem Werkstoff elastisch nachgiebig aufeinander abgestützt sind, umfassend zumindest zwei in Richtung der betriebsbedingt eingeleiteten Schwingungen hintereinander angeordnete, flüssigkeitsgefüllte Arbeitskammern, die auf den einander zugewandten Seiten durch eine gemeinsame Trennwand begrenzt und durch zumindest einen in der Trennwand angeordneten Dämpfungskanal flüssigkeitsleitend miteinander verbunden sind, wobei die Trennwand eine zentrale Ausnehmung aufweist, die einen Bestandteil einer Durchtrittsöffnung bildet, wobei die Durchtrittsöffnung durch ein Druckmittel beaufschlagbares Stellglied einer Stelleinrichtung zu öffnen ist.

Ein solches Lager ist aus der DE-OS 41 41 332 bekannt. Das Stellglied ist durch einen Kolben gebildet, der einer ortsfest im Gehäuse des Lagers angeordneten, druckmittelbeaufschlagbaren Steuerdruckdose gasdicht und relativ beweglich zugeordnet ist, wobei die Steuerdruckdose, in Abhängigkeit von der Ausgestaltung des Lagers, mit Unterdruck oder Überdruck pneumatisch druckbeaufschlagbar ist. Das vorbekannte Lager ist als Motorlager ausgebildet, wobei die zentrale Durchtrittsöffnung während des Fahrbetriebs von einem stopfenförmigen Wulst verschlossen ist. Niederfrequente Schwingungen mit großen Amplituden werden durch eine Flüssigkeitsverlagerung innerhalb des Dämpfungskanals gedämpft, während hochfrequente Schwingungen mit kleinen Amplituden durch die innerhalb der Trennwand angeordnete, axial bewegliche Membran isoliert werden. Dabei ist allerdings zu beachten, daß die Kreisringfläche der Membran nur geringe Abmessungen aufweist. Außerdem ist das Flüssigkeitsvolumen innerhalb der geöffneten Durchtrittsöffnung zur Erzielung des Tilgereffekts vergleichsweise gering.

Der Erfindung liegt die Aufgabe zugrunde, ein Lager der vorbekannten Art derart weiterzuentwickeln, daß sich insbesondere im Motorleerlauf eine deutlich abgesenkte wirksame Lagersteifigkeit einstellt.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß die Durchtrittsöffnung einen sich in radialer Richtung erstreckenden, mäanderförmigen Querschnitt aufweist. Diese Durchtrittöffnung wird durch die Hintereinanderschaltung der zentralen Ausnehmung und der Ringräume gebildet, die sich durch den mäanderförmigen Querschnitt ergeben. Die Querschnitte der gesamten Kanalabschnitte sind nahezu gleich. Durch diese Ausgestaltung wird bei geöffnetem Kanal ein Tilgereffekt wirksam. Die Abstimmung dieses Tilgereffekts führt beim Motorleerlauf zu einer deutlich kleineren wirksamen Lagersteifigkeit und damit zu einer verbesserten Isolation von störenden Motorvibrationen. Die Anzahl der in radialer Richtung aufeinander folgenden Mäander kann den jeweiligen Gegebenheiten des Anwendungsfalls angepaßt werden, wobei von hervorzuhebender Bedeutung ist, daß das erfindungsgemäße Lager durch die Ausgestaltung der Durchtrittsöffnung in axialer Richtung kompakte Abmessungen aufweist.

Hinsichtlich einer einfachen und kostengünstigen Herstellbarkeit kann es gemäß einer vorteilhaften Ausgestaltung vorgesehen sein, daß die Durchtrittsöffnung von der Trennwand und dem Stellglied begrenzt ist, wobei die Ausnehmung von einer in Richtung des Stellglieds offenen kreisförmigen Nut konzentrisch umschlossen ist, wobei das Stellglied topfförmig mit einem axial in Richtung der Trennwand vorspringenden Rand ausgebildet ist und wobei die axiale Begrenzung des Rands bedarfsweise mit dem Nutgrund der Nut dichtend in Eingriff bringbar ist. Dadurch, daß die Durchtrittsöffnung durch zwei Bauteile gebildet ist, die gemeinsam miteinander den meanderförmigen Kanal bilden, ist die Formgebung und Herstellung der beiden Bauteile einfach, wodurch das Lager in wirtschaftlicher Hinsicht kostengünstig herstellbar ist.

Das Stellglied kann eine Dichtfläche aus elastomerem Werkstoff aufweisen. Dadurch werden Anschlaggeräusche und -erschütterungen beim Schalten des Stellglieds minimiert und eine zuverlässige Abdichtung der Durchtrittsöffnung ist während einer langen Gebrauchsdauer bedingt. Eine aufwendige Bearbeitung des Nutgrunds zur Erzielung einer möglichst geringen Oberflächenrauhigkeit ist durch die Beschichtung des Rands mit elastomerem Werkstoff entbehrlich.

Zur Verbesserung der Isolierung akustisch störender, höherfrequenter Schwingungen ist es vorgesehen, daß das topfförmige Stellglied mit einem schwingfähigen Boden aus elastomerem Werkstoff versehen ist und daß der Boden als schaltbare Zentralmembran ausgebildet ist. Die Zentralmembran ist derart schaltbar, daß sie bei verschlossener Durchtrittsöffnung, also während des Fahrbetriebs oberhalb der Leerlaufdrehzahl einer angeschlossenen Verbrennungskraftmaschine zur Isolierung höherfrequenter Schwingungen schwingfähig gelagert ist. Ist demgegenüber die Durchtrittsöffnung zur Reduzierung leerlaufbedingter Schwingungen geöffnet, ist die Zentralmembran vorgespannt und relativ starr zum Stellglied angeordnet.

Das Stellglied und die Zentralmembran sind bevorzugt nur gemeinsam druckmittelbeaufschlagbar und synchron betätigbar. Hierbei ist von Vorteil, daß es zur Betätigung sowohl des Stellglieds als auch der Zentralmembran nur einer Betätigungseinrichtung bedarf, was sowohl im Hinblick auf einen einfachen Aufbau des Lagers als auch in wirtschaftlicher Hinsicht von hervorzuhebendem Vorteil ist.

Die Dichtfläche und die Zentralmembran können einstückig ineinander übergehend ausgebildet sein. Durch die einstückige Ausgestaltung ist eine vergleichsweise einfache Herstellbarkeit und eine absolut dichte Verbindung zwischen den Teilen gewährleistet. Nach einer anderen Ausgestaltung können die Dichtfläche und die Zentralmembran, die einstückig ineinanderübergehend ausgebildet sind, mit einer zur Anwendung gelangenden Membran einstückig verbunden sein. Die Membran schließt die dem Stellelement zugewandte Arbeitskammer flüssigkeitsdicht ab. Diese Membran ist derart gestaltet, daß sie bei Flüssigkeitsverlagerungen von einer in die andere Arbeitskammer weitgehend drucklos Volumen aufnehmen kann.

Um eine wirkungsvolle Isolierung höherfrequenter Schwingungen zu erzielen, ist die Trennwand bevorzugt in axialer Richtung zweiteilig ausgeführt und gitterartig durchbrochen, wobei die Trennwand nur im Bereich der gitterartigen Struktur eine kreisringförmige Membran umschließt.

Die Zentralmembran und die kreisförmige Membran sind bei nicht-druckbeaufschlagtem Stellglied und geschlossener Durchtrittsöffnung einander in einer funktionstechnischen Parallelschaltung zugeordnet. Durch diese Ausgestaltung wird eine besonders effiziente Schwingungsisolierung höherfrequenter Schwingungen erzielt.

Zur Funktion des Lagers wird folgendes ausgeführt: Gelangt das Lager beispielsweise zur Abstützung einer Verbrennungskraftmaschine in einem Kraftfahrzeug zur Anwendung, wird im wesentlichen zwischen den Betriebszuständen "nicht-druckbeaufschlagt" und "druckbeaufschlagt" unterschieden. Während des Betriebs der Verbrennungskraftmaschine oberhalb der Leerlaufdrehzahl ist die zentrale Durchtrittsöffnung der Trennwand durch das federbelastete Stellglied verschlossen. Das Lager arbeitet wie an sich bekannte Hydrolager, wobei niederfrequente Schwingungen mit großen Amplituden durch Flüssigkeitsverlagerungen innerhalb des Dämpfungskanals gedämpft werden. Höherfrequente Schwingungen mit kleinen Amplituden werden durch die innerhalb der Trennwand angeordnete und axial in Richtung der eingeleiteten Schwingungen bewegliche Membran isoliert. Zur Verbesserung der Isolierung akustisch störender Schwingungen weist das erfindungsgemäße Lager zusätzlich zu der innerhalb der Trennwand angeordneten, kreisringförmigen Membran eine Zentralmembran auf, die in dem hier beschriebenen Betriebszustand schwingfähig im zentralen Bereich des Lagers angeordnet ist. Durch diese Ausgestaltung der funktionstechnisch parallel geschalteten Bauteile wird eine vergleichsweise große Fläche zur Isolierung höherfrequenter Schwingungen bereitgestellt.

Eine Umschaltung des Lagers erfolgt, wenn die angeschlossene Verbrennungskraftmaschine im Leerlauf nahen Drehzahlbereich läuft. Zur Minimierung der in diesem Betriebszustand auftretenden Schwingungen werden das Stellglied und die Zentralmembran unterdruckbeaufschlagt, wobei die zentrale Durchtrittsöffnung durch das Stellglied freigegeben wird und die beiden Arbeitskammern auf diesem Wege dann flüssigkeitsleitend miteinander verbunden sind. Die Zentralmembran, die ebenfalls unterdruckbeaufschlagt ist, wird unter Vorspannung gehalten. Hieraus ergibt sich ein progressiver Kraft (Druck)-Weg-Verlauf. Die Nachgiebigkeit der Zentralmembran ist dann auf ein Minimum reduziert. Die in der Durchtrittsöffnung befindliche Fluidmasse wird als Tilgermasse wirksam und führ zu einer deutlich kleineren, wirksamen Lagersteifigkeit.

Oberhalb der Leerlaufdrehzahl, im nicht-unterdruckbeaufschlagten Zustand, wird als Stellglied von einer im Lager eingebauten Rückstellfeder, die beispielsweise als Schraubendruckfeder ausgebildet sein kann, in Richtung der Trennwand bewegt, bis die Durchtrittsöffnung flüssigkeitsdicht verschlossen ist. Das Lager weist sowohl ausgezeichnete Gebrauchseigenschaften hinsichtlich der Dämpfung tieffrequenter Schwingungen und der Isolierung höherfrequenter Schwingungen in Drehzahlbereichen oberhalb der Leerlaufdrehzahl auf, als auch eine gute Schwingungsisolation von leerlaufbedingten Motorvibrationen.

Die Durchtrittsöffnung kann bei druckbeaufschlagtem Stellglied entlang ihrer gesamten Erstreckung bevorzugt einen übereinstimmenden Durchtrittsquerschnitt aufweisen. Hierbei ist von Vorteil, daß durch den weitgehend konstanten Querschnitt der Durchtrittsöffnung fast keine Störmungsverluste bei Flüssigkeitsverlagerungen innerhalb der Durchtrittsöffnung entstehen und das Lager dadurch eine besonders gute Tilgerwirkung aufweist.

Generell kann das erfindungsgemäße Lager, in Abhängigkeit von dessen Ausgestaltung mit Über- oder Unterdruck beaufschlagt werden. Der Beaufschlagung mit Unterdruck wird im Rahmen der vorliegenden Erfindung allerdings der Vorzug gegeben, da Unterdruck in Kraftfahrzeugen beispielsweise im Ansaugrohr ohnehin zur Verfügung steht und daher nicht durch zusätzliche und kostenaufwendige Pumpen erzeugt werden muß.

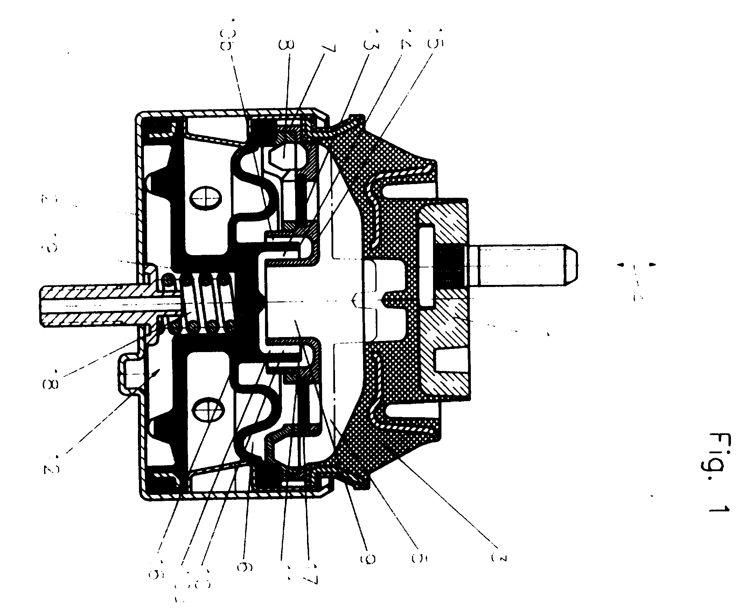

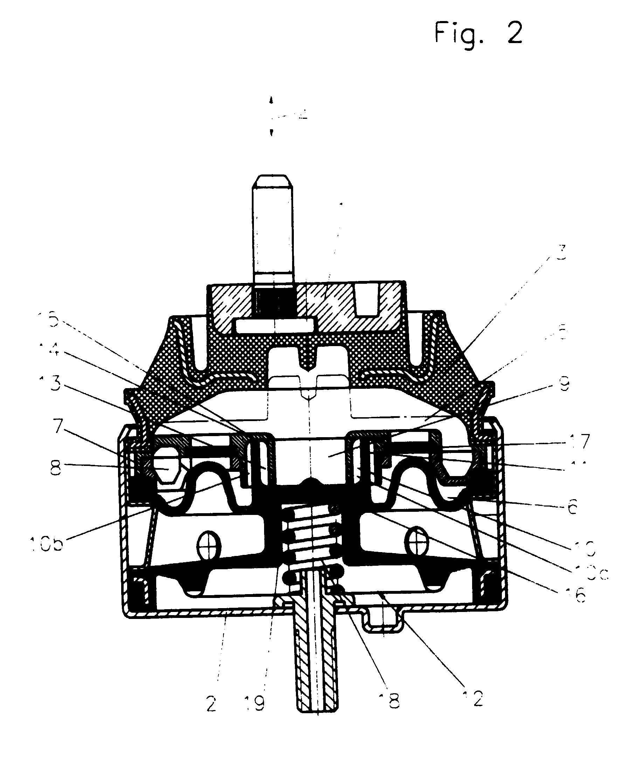

Das erfindungsgemäße Lager wird nachfolgend anhand der als Anlage beigefügten Zeichnungen weiter beschrieben. In den Fig. 1 und 2 ist ein Ausführungsbeispiel gezeigt.

In Fig. 1 ist das Lager im unterdruckbeaufschlagten Zustand gezeigt.

In Fig. 2 ist das Lager aus Fig. 1 im nicht-unterdruckbeaufschlagten Zustand dargestellt.

In den Fig. 1 und 2 ist ein Ausführungsbeispiel des erfindungsgemäßen umschaltbaren hydraulisch dämpfenden Lagers gezeigt, umfassend ein Traglager 1 und ein Auflager 2, die durch eine Tragfeder 3 aus elastomerem Werkstoff elastisch nachgiebig aufeinander abgestützt sind. Innerhalb des Lagers sind in Richtung der eingeleiteten Schwingungen 4 zwei Arbeitskammern 5, 6 vorgesehen, die durch eine Trennwand 7 räumlich voneinander getrennt sind. Die beiden Arbeitskammern 5, 6 sind in diesem Ausführungsbeispiel durch den ringförmigen Dämpfungskanal 8 flüssigkeitsleitend miteinander verbunden. Der Dämpfungskanal 8 wird durch eine in axialer Richtung zweiteilige Trennwand 7 begrenzt, wobei zur Isolierung höherfrequenter Schwingungen eine kreisringförmige Membran 17 zwischen den Bestandteilen der Trennwand 7 befestigt ist. Die Trennwand 7 weist eine zentral angeordnete Ausnehmung 9 auf, die einen Bestandteil der Durchtrittsöffnung 10 bildet und sich in den Teilbereichen 10a und 10b fortsetzt Die Durchtrittöffnung weist bei geöffnetem Stellglied 11 einen rotationssymmetrisch sich in radialer Richtung erstreckenden, mäanderförmigen Querschnitt auf. Das Stellglied 1 ist im wesentlichen topfförmig ausgebildet, wobei der Boden des Stellglieds 11 aus einer schaltbaren Zentralmembran 16 besteht. Zur Vermeidung von Strömungsverlusten ist die Zentralmembran 16 im Bereich der Ausnehmung 9 mit einer Erhebung versehen, die eine widerstandsarme Strömung durch die geöffnete Durchtrittsöffnung 10 erlaubt.

In Fig. 1 ist das Lager im unterdruckbeaufschlagten Zustand gezeigt. Die Unterdruckbeaufschlagung erfolgt in diesem Ausführungsbeispiel durch eine rohrförmige Befestigungsschraube, wobei der Unterdruck das Stellglied 11 der Stelleinrichtung 12 gegen die Kraft einer Rückstellfeder 18 in Offenstellung hält. Die Rückstellfeder 18 ist in einem topfförmigen Blechteil 19 geführt, das in seinem zentralen Bereich eine Ausnehmung im Boden aufweist. Die Ausnehmung innerhalb des Blechteils 19 ermöglicht die Unterdruckbeaufschlagung und die Vorspannung der Zentralmembran 16.

In Fig. 2 ist das Lager aus Fig. 1 gezeigt, wenn die, hier nicht dargestellte Verbrennungskraftmaschine mit einer Drehzahl oberhalb der Leerlaufdrehzahl betrieben wird. Sowohl das Stellglied 11 der Stelleinrichtung 12 als auch die Zentralmembran 16 sind dann nicht-unterdruckbeaufschlagt, wobei das Stellglied 11 durch die Rückstellfeder 18 in dichtenden Eingriff mit dem Nutgrund 15 der Nut 13 gebracht ist. Das topfförmige Stellglied 11 ist allseitig von elastomerem Werkstoff ummantelt, so daß eine sichere Abdichtung des Randes 14 gegenüber dem Nutgrund 15 gewährleistet ist. Die Funktion des Lagers in diesem Betriebszustand entspricht im wesentlichen bekannten Ausführungen von Hydrolagern. Abweichend hiervon sind die Membran 17 und die Zentralmembran 16 in eine funktionstechnischen Parallelschaltung zueinander angeordnet, so daß durch die größere resultierende Fläche eine wesentlich effizientere Isolierung höherfrequenter Schwingungen erfolgen kann.

Die Ansteuerung der Druckbeaufschlagung ist nicht Gegenstand der vorliegenden Erfindung und erfolgt beispielsweise durch die elektronische Motorsteuerung einer Verbrennungskraftmaschine in Abhängigkeit von der Drehzahl.

## Patentansprüche

1. Umschaltbares hydraulisch dämpfendes Lager mit einem Traglager und einem Auflager, die durch eine Tragfeder aus elastomerem Werkstoff elastisch nachgiebig aufeinander abgestützt sind, umfassend zumindest zwei in Richtung der betriebsbedingt eingeleiteten Schwingungen hintereinander angeordnete, flüssigkeitsgefüllte Arbeitskammern, die auf den einander zugewandten Seiten durch eine gemeinsame Trennwand begrenzt und durch zumindest einen in der Trennwand angeordneten Dämpfungskanal flüssigkeitsleitend miteinander verbunden sind, wobei die Trennwand eine zentrale Ausnehmung aufweist, die einen Bestandteil einer Durchtrittsöffnung bildet, wobei die Durchtrittsöffnung durch ein Druckmittel beaufschlagbares Stellglied einer Stelleinrichtung zu öffnen ist, dadurch gekennzeichnet, daß die Durchtrittsöffnung (10) einen sich in radialer Richtung erstreckenden, mäanderförmigen Querschnitt aufweist.

2. Lager nach Anspruch 1, dadurch gekennzeichnet, daß die Durchtrittsöffnung (10) von der Trennwand (7) und dem Stellglied (11) begrenzt ist, daß die Ausnehmung (9) von einer in Richtung des Stellglieds (11) offenen, kreisringförmigen Nut (13) konzentrisch umschlossen ist, daß das Stellglied (11) topfförmig mit einem axial in Richtung der Trennwand (7) vorspringenden Rand (14) ausgebildet ist und die axiale Begrenzung des Rands (14) bedarfsweise mit dem Nutgrund (15) der Nut (13) dichtend verschließbar ist.

3. Lager nach Anspruch 1 bis 2, dadurch gekennzeichnet, daß das Stellglied (11) eine Dichtfläche aus elastomerem Werkstoff aufweist.

4. Lager nach Anspruch 2 bis 3, dadurch gekennzeichnet daß das topfförmige Stellglied (11) mit einem schwingfähigen Boden aus elastomerem Werkstoff versehen ist und daß der Boden als schaltbare Zentralmembran (16) ausgebildet ist.

5. Lager nach Anspruch 1 bis 4, dadurch gekennzeichnet, daß das Stellglied (11) und die Zentralmembran (16) nur gemeinsam durckmittelbeaufschlagbar und synchron betätigbar sind.

6. Lager nach Anspruch 3 bis 5, dadurch gekennzeichnet, daß die Dichtfläche und die Zentralmembran (16) einstückig ineinander übergehend ausgebildet sind.

7. Lager nach Anspruch 1 bis 6, dadurch gekennzeichnet, daß die Trennwand (7) in axialer Richtung zweiteilig ausgeführt und gitterartig durchbrochen ist und nur im Bereich der gitterartigen Struktur eine kreisringförmige Membran (17) umschließt.

8. Lager nach Anspruch 1 bis 7, dadurch gekennzeichnet, daß die Zentralmembran (16) und die kreisringförmige Membran (17) bei nicht-druckbeaufschlagem Stellglied (11) und geschlossener Durchtrittsöffnung (10) einander in einer funktionstechnischen Parallelschaltung zugeordnet sind.

9. Lager nach Anspruch 1 bis 8, dadurch gekennzeichnet, daß die Durchtrittsöffnung (10) bei druckbeaufschlagtem Stellglied (11) entlang ihrer gesamten Erstreckung einen übereinstimmenden Durchtrittsquerschnitt aufweist.

10. Lager nach Anspruch 1 bis 9, dadurch gekennzeichnet, daß das Stellglied (11) und die Zentralmembran (16) mit einem den atmosphärischen Druck unterschreitenden Druck pneumatisch beaufschlagbar sind.

## Claims

1. A reversible, hydraulically damping mount with a carrier bearing and with a support bearing which are supported one on the other in an elastically resilient manner by means of a carrier spring made of elastomeric material, comprising at least two fluid-filled working chambers which are arranged in succession in the direction of the vibrations introduced as a consequence of operation and which are limited on the sides facing one another by a common partition and are connected to one another in a fluid-conducting manner by means of at least one damping duct arranged in the partition, the partition having a central recess which forms an integral part of a passage orifice, the passage orifice is to be opened by means of an actuator of a regulating device, said actuator being capable of being loaded by pressure medium, characterized in that the passage orifice (10) has a meander-like cross-section extending in the radial direction.

2. A mount according to claim I, characterized in that the passage orifice (10) is limited by the partition (7) and the actuator (11), in that the recess (9) is surrounded concentrically by an annular groove (13) open in the direction of the actuator (11), and in that the actuator (11) is made pot-shaped with an edge (14) projecting axially in the direction of the partition (7) and the axial limitation of the edge (14) can be sealingly closed, if required, by means of the groove bottom (15) of the groove (13).

3. A mount according to either of claims 1 and 2, characterized in that the actuator (11) has a sealing face made of elastomeric material.

4. A mount according to either of claims 2 and 3, characterized in that the pot-shaped actuator (11) is provided with a vibratable base made of elastomeric material, and in that the base is designed as a switchable central diaphragm (16).

5. A mount according to any of claims 1 to 4, characterized in that the actuator (11) and the central diaphragm (16) can be loaded by pressure medium only jointly and can be actuated synchronously.

6. A mount according to any of claims 3 to 5, characterized in that the sealing face and the central diaphragm (16) are designed to merge into one another in one piece.

7. A mount according to any of claims 1 to 6, characterized in that the partition (7) is made two-part in the axial direction and is perforated in a lattice-like manner and surrounds an annular diaphragm (17) only in the region of the lattice-like structure.

8. A mount according to any of claims 1 to 7, characterized in that, when the actuator (11) is not loaded by pressure and with the passage orifice (10) closed, the central diaphragm (16) and the annular diaphragm (17) are assigned to one another in a functional parallel connection.

9. A mount according to any of claims 1 to 8, characterized in that, when the actuator (11) is loaded by pressure, the passage orifice (10) has an identical passage cross-section along its entire extent.

10. A mount according to any of claims 1 to 9, characterized in that the actuator (11) and the central diaphragm (16) can be loaded pneumatically by a pressure which falls below the atmospheric pressure.

## Revendications

1. Support d'amortissement hydraulique commutable comportant un coussinet et un appui reposant l'un sur l'autre de manière élastique grâce à un ressort de suspension en matériau élastomère, comprenant au moins deux compartiments de travail remplis de liquide, disposés l'un derrière l'autre dans le sens des vibrations dues aux conditions de fonctionnement, qui sont délimités sur les côtés tournés l'un vers l'autre par une paroi de séparation commune et reliés entre eux de manière à laisser passer un liquide par au moins un canal d'amortissement disposé dans la paroi de séparation, la paroi de séparation comportant un creux central faisant partie d'un orifice de passage, ledit orifice de passage pouvant s'ouvrir au moyen d'un organe de réglage susceptible d'être mis sous pression d'un dispositif de réglage, caractérisé en ce que l'orifice de passage (10) présente une section en forme de méandre s'étendant dans le sens radial.

2. Support selon la revendication 1, caractérisé en ce que l'orifice de passage (10) est délimité par la paroi de séparation (7) et l'organe de réglage (11), en ce que le creux (9) est entouré concentriquement par une rainure (13) en forme d'anneau de cercle ouverte en direction de l'organe de réglage (11), en ce que l'organe de réglage (11) est réalisé en forme de pot avec un bord (14) faisant saillie axialement en direction de la paroi de séparation (7) et en ce que la délimitation axiale du bord (14) peut le cas échéant être obturée de manière étanche par le fond de rainure (15) de la rainure (13).

3. Support selon l'une des revendications 1 à 2, caractérisé en ce que l'organe de réglage (11) comporte une surface d'étanchéité en matériau élastomère.

4. Support selon l'une des revendications 2 à 3, caractérisé en ce que l'organe de réglage (11) en forme de pot est muni d'un fond en matériau élastomère susceptible de vibrer et en ce que le fond est réalisé sous forme de membrane centrale (16) commutable.

5. Support selon l'une quelconque des revendications 1 à 4, caractérisé en ce que l'organe de réglage (11) et la membrane centrale (16) ne peuvent être mis sous pression et commandés de manière synchronisée que conjointement.

6. Support selon l'une quelconque des revendications 3 à 5, caractérisé en ce que la surface d'étanchéité et la membrane centrale (16) sont exécutées de manière à se fondre l'une dans l'autre.

7. Support selon l'une quelconque des revendications 1 à 6, caractérisé en ce que la paroi de séparation (7) est réalisée dans le sens axial en deux pièces et est ajourée à la manière d'un treillis et enveloppe une membrane (17) en forme d'anneau de cercle uniquement dans la partie de la structure en treillis.

8. Support selon l'une quelconque des revendications 1 à 7, caractérisé en ce que la membrane centrale (16) et la membrane (17) en forme d'anneau de cercle sont affectées l'une à l'autre dans un montage en parallèle fonctionnel, lorsque l'organe de réglage (11) n'est pas mis sous pression et l'orifice de passage (10) est fermé.

9. Support selon l'une quelconque des revendications 1 à 8, caractérisé en ce que l'orifice de passage (10) présente une section de passage concordante sur toute son extension, lorsque l'organe de réglage (11) est mis sous pression.

10. Support selon l'une quelconque des revendications 1 à 9, caractérisé en ce que l'organe de réglage (11) et la membrane centrale (16) peuvent être alimentés pneumatiquement d'une pression inférieure à la pression atmosphérique.
